# EUROPEAN PATENT APPLICATION

(11) **EP 3 352 125 A1**
(43) Date of publication of application: **25.07.2018**
(21) Application number: 16846461.8
(22) Date of filing: 13.09.2016
(51) Int. Cl.: G06Q 30/02, G06Q 50/12

(54) **COUPON ISSUING SYSTEM AND RECORDING MEDIUM**

(30) Priority: 18.09.2015 JP 2015185270
(71) Applicant: Recruit Holdings Co., Ltd., Tokyo 104-0061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2016/076998
(87) International publication number: WO 2017/047590

(57) **Abstract**

There is provided a coupon issue system and the like capable of issuing an attractive coupon to a turn-waiting visitor. When accepting new registration and receiving a request to issue a coupon from a management server 300, a coupon issue server 400 selects a coupon to be issued, based on new registration information and the like transmitted from the management server 300. The new registration information includes the number of persons for the reservation and a seat type, estimated waiting time and the like. The coupon issue server 400 transmits the selected coupon to a turn management terminal 100 of a corresponding store as coupon information. The coupon information received by the turn management terminal 100 is outputted by the printer 200 as a coupon.

## Description

### Cross Reference of Related Application

The present application is based on Japanese Patent Application No. 2015-185270 filed on September 18, 2015, the content of the description of which is hereby incorporated by reference thereto.

### Technical Field

The present invention relates to a coupon issue system and a recording medium.

### Background Art

In stores such as restaurants, various coupons for a discount on products, addition of a special service and the like are issued in order to promote use of the stores. By accessing a website of a store and printing a coupon screen or bringing a coupon printed in a magazine to the store, a user can enjoy various benefits associated with the coupon (see, for example, Patent Literature 1).

### Citation List

### Patent Literature

Patent Literature 1: Japanese Patent Laid-Open No. 2003-208535

### Summary of Invention

By the way, in a popular restaurant or the like which is taken up by various media, a lot of customers (visitors) come to the restaurant every day, and a long queue is often formed. In such a case, customers waiting for their turn just have to wait, and there is a problem that valuable time is spent uselessly.

In order to solve such a problem, it is conceivable, for example, to issue some coupon (for example, a coupon which can be used at a sightseeing facility in a surrounding area) to the turn-waiting customers so that the waiting time is effectively used, and the surrounding area is revitalized, by having the customers visit the facility using the waiting time or appealing to the customers with attractiveness of the surrounding area. However, a system realizing this kind of service is not known yet.

The present invention has been made in view of the situation described above, and an object is to provide a coupon issue system and the like capable of selectively issue a coupon attractive to each of turn-waiting visitors.

A coupon issue system according to an embodiment of the present invention is a coupon issue system for issuing a coupon to a turn-waiting user; the coupon issue system comprising: an input unit accepting new registration of the turn-waiting; a generation unit generating new registration information based on content of acceptance of the new registration; a first storage unit storing pieces of coupon information about facilities where use of the coupon is possible; a selection unit selecting a piece of coupon information based on the new registration information; and an issue unit issuing the selected piece of coupon information to the user.

Here, in the above configuration, an aspect is preferred in which the generation unit calculates estimated waiting time in consideration of at least the number of turn-waiting groups at a current point of time and generates the new registration information including the calculated estimated waiting time; and the selection unit selects the piece of coupon information based on the estimated waiting time.

In addition thereto, an aspect is furthermore preferred in which a detection unit detecting user position information indicating a current position of the user and facility position information indicating a position of a facility is further provided; and the selection unit generates the piece of coupon information based on the estimated waiting time, the user position information and the facility position information.

### Advantageous Effect of Invention

According to the present invention, it becomes possible to selectively issue a coupon to each of turn-waiting visitors which is attractive to the visitor.

### Brief Description of Drawings

[Figure 1] Figure 1 is a diagram showing a schematic configuration of a coupon issue system 1000 according to a first embodiment.
[Figure 2] Figure 2 is a block diagram showing a main configuration of a turn management terminal 100.
[Figure 3] Figure 3 is a block diagram showing a functional configuration of a coupon issue server 400.
[Figure 4] Figure 4 is a flowchart showing a flow of a process for accepting new registration of turn-waiting in the coupon issue system 1000.
[Figure 5] Figure 5 is a diagram illustrating an acceptance screen for accepting turn-waiting.
[Figure 6] Figure 6 is a diagram illustrating a coupon.
[Figure 7] Figure 7 is a flowchart showing a coupon issue process.
[Figure 8] Figure 8 is a flowchart showing a first coupon selection process.
[Figure 9] Figure 9 is a flowchart showing a second coupon selection process.
[Figure 10] Figure 10 is a flowchart showing a third coupon selection process.
[Figure 11] Figure 11 is a flowchart showing a facility status update process.
[Figure 12] Figure 12 is a sequence diagram in a case where turn management is performed using three turn management terminals 100A to 100C.

### Description of Embodiments

Embodiments of the present invention will be described below in detail with reference to drawings. Same components are given the same reference numeral, and overlapped description will be omitted.

### A. First embodiment

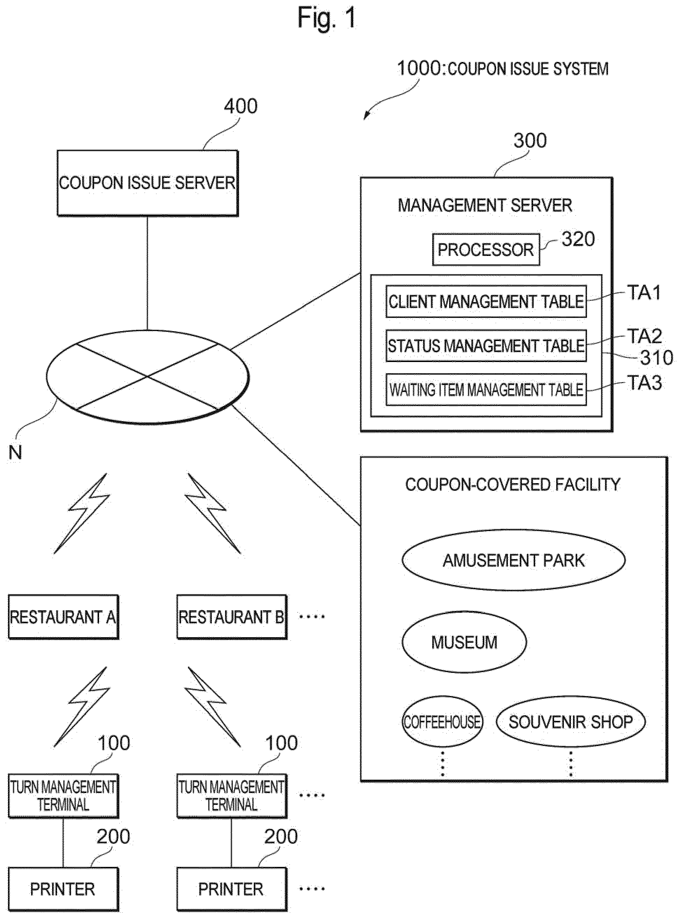

Figure 1 is a diagram showing a schematic configuration of a coupon issue system 1000 according to a first embodiment. The coupon issue system 1000 is provided with turn management terminals 100 which are provided in stores such as restaurants to manage turn-waiting of visitors, printers 200 connected to the turn management terminals 100, a management server 300 which comprehensively manage the turn management terminals 100 through a communication network N, and a coupon issue server 400 which issues coupons to turn-waiting visitors.

In Figure 1, Restaurant A and Restaurant B are illustrated as an example of stores in which the turn management terminal 100 is provided. However, it is, of course, not intended to limit stores thereto, and the turn management terminal 100 is applicable to all facilities where turn-waiting occurs, such as coffeehouses and bars, complex amusement systems, shopping malls, department stores, hospitals and public facilities. Hereinafter, in order to facilitate understanding of description, facilities in which the turn management terminals 100 are provided will be generically referred to as "stores".

The turn management terminal 100 is a terminal apparatus placed in the vicinity of an entrance of a store or the like to manage admission of visitors and turn-waiting at the time of receiving provision of various services. As the turn management terminal 100, all terminal apparatuses capable of giving and receiving data to and from the management server 300 via the communication network N, such as a personal computer (PC), a notebook PC, a smartphone, a mobile telephone and a mobile information terminal (PDA), can be used in addition to a tablet terminal.

The printer 200 is wiredly or wirelessly connected to the turn management terminal 100 and issues turn tickets showing turn-waiting numbers or coupons giving various benefits.

The management server 300 is configured, for example, with a computer with a high arithmetic processing capability and realizes a server function by a predetermined server program operating on the computer. Here, the management server 300 is not necessarily required to be constituted by one computer. The management server 300 may be configured with a plurality of computers distributed on the communication network N. The management server 300 is provided with a management database 310 for managing the turn management terminal 100 for each store and a processor 320. The management database 310 is provided with a client management table TA1 and a status management table TA2.

A specific ID and password (account) are registered with the client management table TA1 in association with each store. Here, "ID: A1..." and "Password: AA2..." are set for the turn management terminal 100 used in "Restaurant A". The ID and password for each store are set, for example, by a manager who performs management of turn-waiting in the store (for example, the owner of the store or the like) at the time of introducing the system. Although a case is assumed where one turn management terminal 100 is used in one store in the present embodiment, a plurality of turn management terminals 100 may be used in one store (this is to be described later). In the case of using a plurality of turn management terminals 100 in one store, the same ID and password may be used, but a plurality of different IDs and passwords may be used, for example, according to a predetermined condition.

A turn-waiting list in each store is registered with the status management table TA2. This turn-waiting list includes a list of turn-waiting persons and information indicating a turn-waiting state (status) of each person (status information). For example, as for Restaurant A, the status information shows that the number of reserving groups waiting for their turn is "1", "one adult and one child", "the number of persons for the reservation is 2", acceptance time is "11:11 a.m.", a specified seat type is "table", and the like. Registration content of the status management table TA2 is changed based on information newly registered with the turn-waiting list transmitted from the turn management terminal 100 or status update information (details will be described later). What kind of information is to be the status information can be appropriately set or changed by a manager or the like of each facility.

Waiting items which can be selected at the time of reservation and reference waiting time for each waiting item, which are set for each store, are registered with a waiting item management table TA3. For example, waiting items set for the turn management terminal 100 used in "Restaurant A" are seat types, and, here, "table", "counter" and "terrace seats" are set. The reference waiting time is average waiting time until one turn-waiting group is guided, and the reference waiting time can be changed for the first group and for the second and subsequent groups. For example, here, waiting time for the first group (15 minutes) and waiting time for the second and subsequent groups (10 minutes) are set for "table", waiting time for the first group (5 minutes) and waiting time for the second and subsequent groups (3 minutes) are set for "counter", and waiting time for the first group (20 minutes) and waiting time for the second and subsequent groups (25 minutes) are set for "terrace seats". The waiting items and reference waiting times for each store are set, for example, by a manager who performs management of turn-waiting in each facility (for example, an owner of a store) at the time of introducing the system. Further, the waiting items and the reference waiting times can be changed at any time as necessary.

The processor 320 is configured with an arithmetic/logical operation unit (such as a CPU) which performs arithmetic operation, logical operation, bit operation and the like and various registers, and centrally controls each portion of the management server 300 by executing various programs stored in storage means such as a ROM. Further, the processor 320 executes a computer program for managing turn-waiting in cooperation with the turn management terminals 100.

The coupon issue server 400 is configured with a server computer or the like, and issues a selected coupon in response to a coupon issue request from the management server 300. The coupon issued by the coupon issue server 400 is returned to the management server 300 as coupon information and sent to the turn management terminal 100 of a store (here, Restaurant A) via the communication network N. The coupon information transmitted to the turn management terminal 100 is issued as a coupon from the printer 200.

The communication network N includes a communication network through which information can be mutually transmitted and received among the coupon issue server 400, the management server 300 and the turn management terminals 100. The communication network N may be, for example, any of the Internet, LAN, dedicated line, telephone line, in-house network, mobile communication network, Bluetooth(R), WiFi (Wireless Fidelity), other communication lines and a combination thereof, and whether wired or wireless does not matter.

### <Turn management terminal 100>

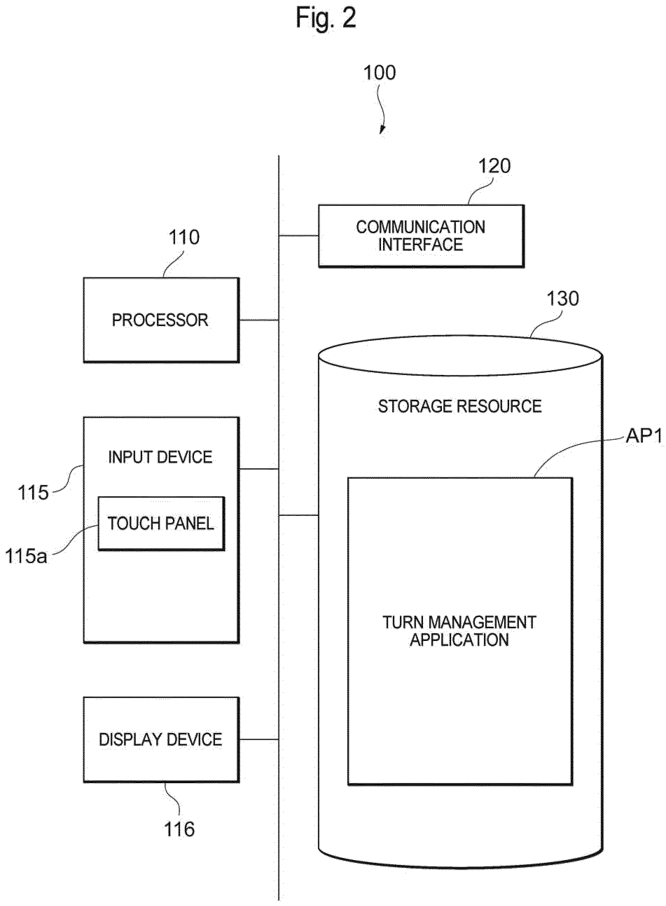

Figure 2 is a block diagram showing a main configuration of the turn management terminal 100. The turn management terminal 100 is provided with a processor 110, an input device 115, a display device 116, a communication interface 120 and a storage resource 130. The turn management terminal 100 accepts an input of acceptance to the turn-waiting list, cancellation and the like by a user directly operating the input device 115 such as a touch panel. Here, as the user, a visitor to a store, an employee or the like of the store or the like is conceivable. For example, a visitor makes an input for newly registering turn-waiting with the turn-waiting list, and an employee or the like makes an input for updating the status of information registered with the turn-waiting list. Here, a manager of a store, employees and the like are generically referred to as employees.

The processor 110 is configured with an arithmetic/logical operation unit (such as a CPU) which performs arithmetic operation, logical operation, bit operation and the like and various registers, and centrally controls the portions of the turn management terminal 100 by executing various programs stored in the storage resource 130. The various registers are, for example, a program counter, a data register, an instruction register, a general-purpose register and the like.

The input device 115 is provided with various operation buttons and a touch panel 115a for accepting an input for acceptance to the turn-waiting list, cancellation from the turn-waiting list and the like.

The display device 116 is a device for displaying an acceptance screen which includes the turn-waiting list, an acceptance button and the like, and a standby screen and is configured, for example, with a liquid crystal display.

The communication interface 120 is a hardware module for connecting to the communication network N to communicate with other terminals on the communication network N. The communication interface 120 is a modulation/demodulation device, for example, an ISDN modem, an ADSL modem, a cable modem, an optical modem, a software modem or the like.

The storage resource 130 is, for example, a logic device provided by a storage area of a physical device. The physical device is, for example, a computer-readable recording medium such as a disk drive and a semiconductor memory (a ROM, a RAM or the like). The storage resource 130 may be constructed by mapping a plurality of physical devices onto one logical device or may be constructed by mapping one physical device onto a plurality of logical devices.

The storage resource 130 stores an operating system program, driver programs, various data and the like. The driver programs include, for example, a communication interface driver program for controlling the communication interface 120 and the like. Further, the storage resource 130 stores a computer program (a turn management application) AP1 for managing turn-waiting in cooperation with the management server 300 by being executed by the processor 110 in addition to the various programs and the various data.

### <Coupon issue server 400>

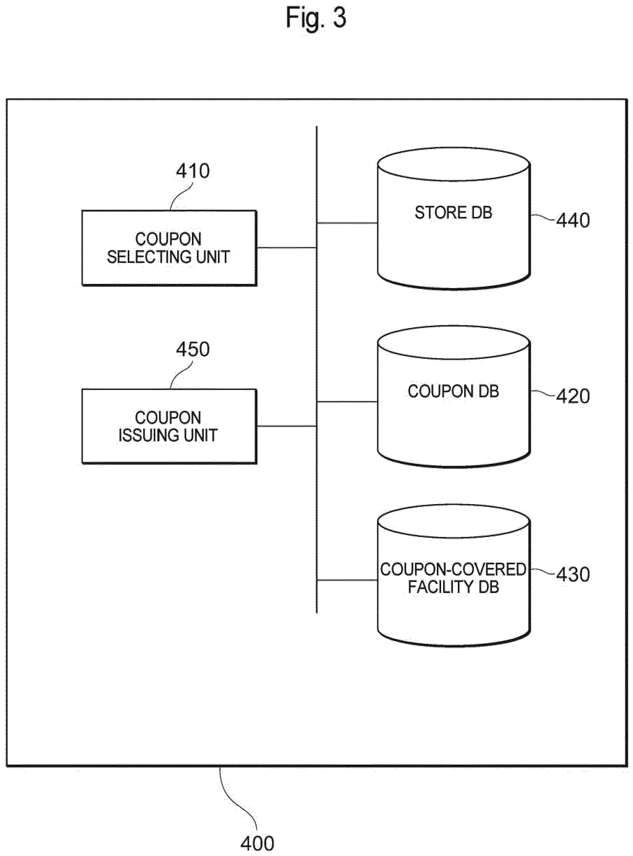

Figure 3 is a block diagram showing a functional configuration of the coupon issue server 400. The coupon issue server 400 is provided with a coupon selecting unit 410, a coupon DB 420, a coupon-covered facility DB 430, a store DB 440, a coupon issuing unit 450 or the like.

The coupon selecting unit 410 selects a coupon suitable for a visitor (including a group of visitors) in accordance with a coupon selection algorithm set in advance. It is possible to perform (1) selection of a coupon corresponding to estimated waiting time, (2) selection of a coupon corresponding to an attribute of a turn-waiting user and (3) selection of a coupon corresponding to turn-waiting acceptance time.

An identification ID of each coupon-covered product (including a service), a name of the coupon-covered product, a sales price, a product cost price, a coupon discount rate and the like are registered with the coupon DB 420 in association with the product.

An identification ID of each facility where a coupon can be used (hereinafter referred to as a coupon-covered facility), position information (latitude, longitude and the like), a name of the facility, contact information (an address, a telephone number, a mail address and the like) about the facility, status information indicating a congestion state, event information (content of an event and a date and time of the event) and the like are registered with the coupon-covered facility DB 430 in association with the facility.

An identification ID of each store where a visitor performs acceptance of waiting, position information (latitude, longitude and the like), a name of the store, contact information (addresses, telephone numbers, mail addresses and the like) about the store, status information indicating a congestion state and the like are registered with the store DB 440 in association with the store. Here, in the present embodiment, a case is assumed where stores which performs acceptance of waiting of visitors and coupon-covered facilities are separately registered. However, a store which performs acceptance of waiting of visitors (in Figure 1, Restaurants A and B) may be coupon-covered facilities, and, on the contrary, coupon-covered facilities may be stores which performs acceptance of waiting.

The coupon issuing unit 450 transmits one or more coupons selected by the coupon selecting unit 410 to the turn management terminal 100 of a corresponding store as coupon information. As described before, the coupon issue server 400 stores the contact information about each store. Therefore, the coupon issue server 400 can certainly transmit the coupon information to the turn management terminal 100 by using the contact information about the store.

The coupon information transmitted to the turn management terminal 100 is issued as a coupon via the printer 200. Thereby, a turn-waiting visitor can obtain an optimal coupon corresponding to the current waiting state.

Next, operation of the coupon issue system 1000 in the present embodiment will be described.

### <Process for new registration of turn-waiting>

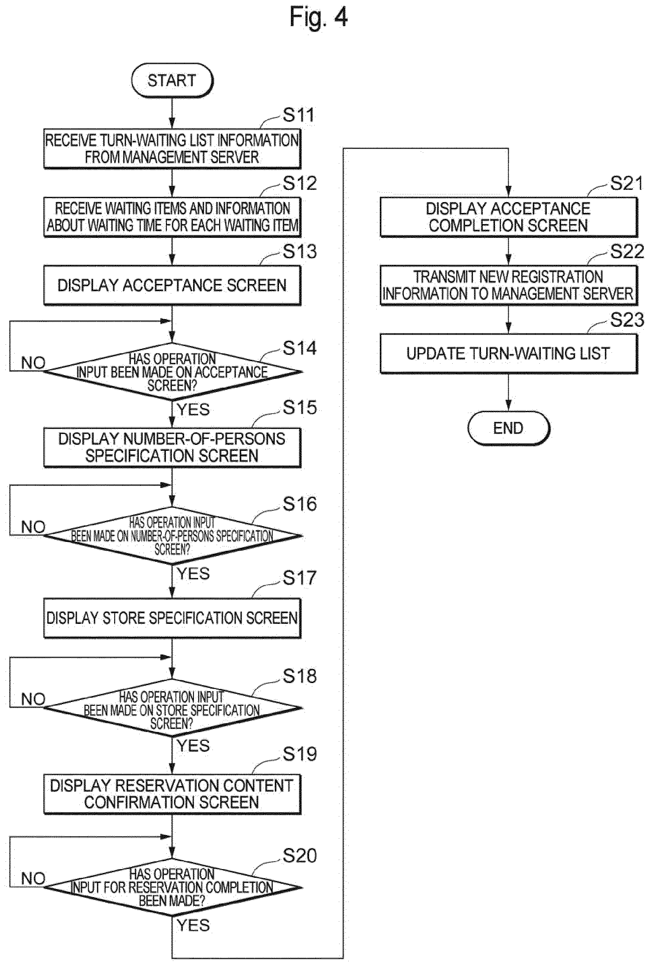

Figure 4 is a flowchart showing a process for new registration of turn-waiting.

First, in order to order a popular menu item, a visitor visiting a store (in Figure 1, Restaurant A or the like) operates the turn management terminal (an input unit) 100 placed in the store so that acceptance for newly registering turn-waiting with the turn-waiting list is performed. Specifically, the visitor appropriately operates the touch panel 115a following a message displayed on the display device 116 to input the number of persons for reservation, a desired waiting item (for example, a seat type such as a table and a counter), and the like. What are to be items which can be inputted at the time of acceptance can be decided according to intention of a manager or the like of each store.

Instead of the visitor directly operating the touch panel 115a, an employee or the like may make an input to accept turn-waiting. At this time, the employee or the like may operate the turn management terminal 100 placed in the vicinity of the entrance of the store or may operate the turn management terminal 100 the employee or the like individually uses.

After that, the turn management terminal 100 receives information included in the turn-waiting list registered with the status management table TA2 from the management server 300 via the communication interface 120 (step S11). Furthermore, the turn management terminal 100 receives waiting items registered with the waiting item management table TA3 and information about current waiting time for each waiting item, from the management server 300 (step S12). As for the current waiting time (estimated waiting time) for each waiting item, the management server 300 calculates the time based on reference waiting time for each waiting item registered with the waiting item management table TA3. For example, in the case of the turn management terminal 100 used in "Restaurant A", if "table" seats are reserved by two groups, estimated waiting time of "table" seats is 15 (waiting time for the first group)+10 (waiting time for the second group)+10 (waiting time for the third group)=35 minutes.

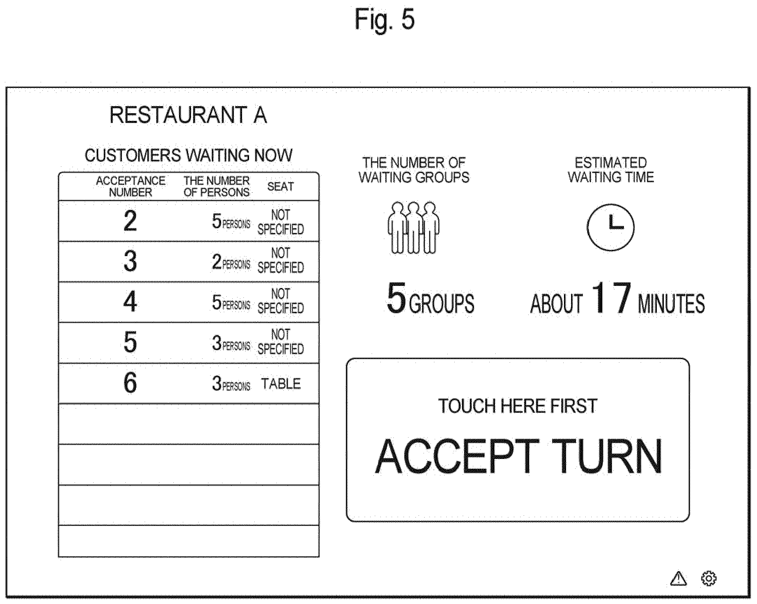

Next, the turn management terminal 100 causes an acceptance screen for accepting turn-waiting as illustrated in Figure 5 to be displayed on the display device 116 (step S13).

Figure 5 is a diagram illustrating the acceptance screen displayed on the display device 116 of the turn management terminal 100. As shown in Figure 5, at least a part of the turn-waiting list registered with the status management table TA2 of the management server 300, for example, a list of lines arranged in chronological order of acceptance is displayed on the acceptance screen, each of the lines including an acceptance number of a turn-waiting person, the number of members of the person, the type of specified seats (a waiting item) and the like. Further, a total number of groups that are currently waiting for their turn (a total number of groups waiting for all seat types) is also displayed. Furthermore, estimated waiting time, acceptance time (not shown), a message prompting an operation of acceptance to the turn-waiting list, an acceptance button and the like are displayed on the display device 116.

A method of displaying the estimated waiting time can be selected according to a use purpose of each store. Specifically, any of "shortest waiting time", "longest waiting time" and "total waiting time" can be selected.

The "shortest waiting time" is waiting time in a case where an item for which the current waiting time is the shortest is selected. For example, it is conceivable that, in a restaurant, a visitor wants to know how long the shortest time before being guided to a seat is. Therefore, in such a store, the "shortest waiting time" can be selected as the method of displaying the estimated waiting time. Description will be made using the example of Restaurant A described above. If there are two turn-waiting groups, one turn-waiting group and one turn-waiting group for "table", "terrace seats" and "counter", respectively, then waiting time in a case where "table" is selected by the next visitor is 15+10+10=35 (minutes), waiting time in a case where "terrace seats" is selected is 20+25=45 (minutes), and waiting time in a case where "counter" is selected is 5+3=8 (minutes). Therefore, presented estimated waiting time is the shortest 8 (minutes).

The "longest waiting time" is waiting time in a case where an item for which the current waiting time is the longest is selected. For example, it is conceivable that, in a repair shop for electric products, waiting time depends on the type of a product which a visitor wants to repair. Therefore, it is conceivable that a visitor wants to know how long he may have to wait at the longest. Therefore, in such a store, the "longest waiting time" can be selected as the method of displaying the estimated waiting time. Description will be made on a specific example. If there are combinations of a waiting item and reference waiting time of "smartphone (15 minutes)", "mobile phone (10 minutes)" and "notebook PC (15 minutes)", and there are two turn-waiting groups, one turn-waiting group and one turn-waiting group for "smartphone", "mobile phone" and "notebook PC", respectively, then waiting time in a case where "smartphone" is selected by the next visitor is 15×2+10=45 (minutes), waiting time in a case where "mobile phone" is selected is 10+10=20 (minutes), and waiting time in a case where "notebook PC" is selected is 15+15=30 (minutes). Therefore, presented estimated waiting time is the longest 45 (minutes).

The "total waiting time" is obtained by adding, for example, the shortest reference waiting time to total time until turn-waiting of all turn-waiting groups registered with the turn-waiting list is completed. It is conceivable to use the "total waiting time" in a store like a taiyaki (fish-shaped pancake) shop where a combination of a plurality of kinds of products (with strained sweet red beans, with smashed sweet red beans, with cream, and the like) can be ordered. Description will be made on a specific example. If reference waiting time for "with strained sweet red beans" and "with smashed sweet red beans" is two minutes, and reference waiting time for "with cream" is three minutes, the first group, the second group and the third group order (strained sweet red beans×2), (smashed sweet red beans×3) and (strained sweet red beans×1+cream×2), respectively, then estimated waiting time of the fourth group is calculated as 2×2+2×3+(2×1+3×2)+2=20 (minutes).

Though the estimated waiting time may be calculated in the processor 320 of the management server and transmitted to the turn management terminal 100, it may be directly calculated in the turn management terminal 100. In this case, the turn management terminal 100 can acquire the reference waiting time of each waiting item and the current number of turn-waiting groups for each waiting item from the management server 300 and calculate the estimated waiting time. However, in description below, the "shortest waiting time", "longest waiting time" and "total waiting time" will be generically referred to as "estimated waiting time" if it is not especially necessary to limit which of them estimated waiting time is to be set.

The turn management terminal 100 detects whether or not an operation input by a visitor, an employee or the like via the input device 115 such as the touch panel 115a has been made on the displayed acceptance screen (step S14). For example, if an operation to the touch panel 115a is detected, and an input is accepted (step S14: YES), a number-of-persons specification screen for specifying the number of persons for turn-waiting is caused to be displayed on the display device 116 (step S15). A message prompting an operation of inputting the number of persons, a number-of-persons specification button and the like are displayed on the number-of-persons-specification screen.

The turn management terminal 100 detects whether or not an operation input by the visitor, the employee or the like via the input device 115 has been made on the displayed number-of-persons specification screen (step S16). If an operation to the touch panel 115a is detected, and an input of the number of persons is accepted (step S16: YES), a seat specification screen for specifying a seat type is caused to be displayed on the display device 116 (step S17).

The turn management terminal 100 detects whether or not an operation input by the visitor, the employee or the like via the input device 115 has been made on the displayed seat specification screen (step S18). If an operation to the touch panel 115a is detected, and an input of specification of a seat type is accepted (step S18: YES), a reservation content confirmation screen is caused to be displayed on the display device 116 (step S19). On the reservation content confirmation screen, the accepted number of persons and seat type are displayed. A message prompting confirmation of content of the reservation, a message prompting a reservation decision operation, a reservation decision button and the like are displayed. If "not specified" is selected as the seat type at step S18, turn-waiting is set for all the types of seats, that is, in Figure 5, "table", "counter" and "terrace seats".

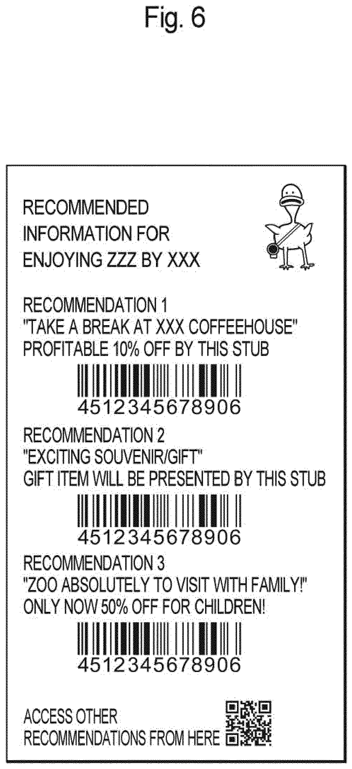

The turn management terminal 100 detects whether a reservation completion operation has been performed or not (step S20). If the reservation completion operation is accepted (step S20: YES), an acceptance completion screen is caused to be displayed (step S21). On the acceptance completion screen, an acceptance number (a waiting number), estimated waiting time and the like are displayed. Further, on the acceptance completion screen, a message prompting reception of a coupon suitable for the visitor is displayed together with a turn ticket. The visitor can receive the turn ticket and the coupon (see Figure 6) printed from the printers 200 connected to the turn management terminal 100. Issue of a coupon and how to use the issued coupon will be described later.

When reservation is established as described above, the turn management terminal (a generation unit) 100 generates new registration information including the number of persons, the seat type, the estimated waiting time and the like based on the reservation content. Then, the turn management terminal 100 transmits the generated new registration information to the management server 300 (step S22).

Receiving new registration information from a certain facility (here, Restaurant A), the management server 300 performs a process of adding one turn-waiting group to the turn-waiting list based on the received new registration information and updates the status management table TA2 (step S23).

Update of the turn-waiting list of each facility occurs not only at the time of accepting new registration but also at the time when any of operations of "cancel", "change", "call" and "guide" has been performed by an employee or the like for registered turn-waiting. The "cancel" means to cancel turn-waiting, and "change" means to change details of turn-waiting (such as the number of persons for reservation) that have been inputted once. Further, "call" means a state of having verbally called a reserving person and informed that the person's reservation has come or a state of having informed the reserving person to that effect by telephone or mail, and "guide" means to, at the time of having guided a person whose turn has come, delete a turn-waiting line for the person.

For example, when having guided a turn-waiting person or the person's group into the store, an employee or the like performs the "guide" operation. When the "guide" operation has been performed, a corresponding person in the first position in order is deleted from the turn-waiting list, and the next person is displayed on the turn management terminal 100 as being in the first position in order in the turn-waiting list. In a case where the "cancel", "change" or "call" operation is performed, a process corresponding to each update operation is performed similarly.

### <Coupon issue process>

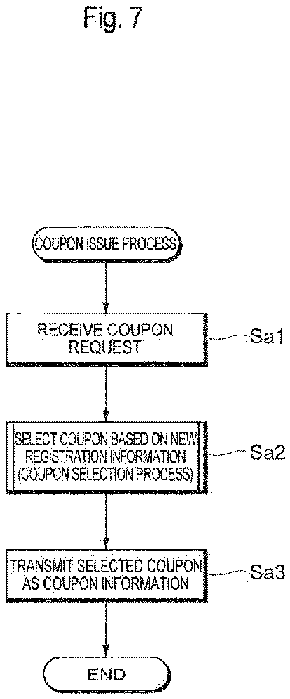

Figure 7 is a flowchart showing a coupon issue process executed by the coupon issue server 400. When accepting new registration and receiving a request to issue a coupon (hereinafter referred to as a coupon request) from the management server 300 (step Sa1), the coupon issue server (a selection unit) 400 selects a coupon to be issued, based on new registration information and the like transmitted from the management server 300 (step Sa2). Details about selection of a coupon (a coupon selection process) will be described later minutely. The coupon issue server (an issue unit) 400 transmits the selected coupon to the turn management terminal 100 of a corresponding store as coupon information (step Sa3) and ends the process. The coupon information received by the turn management terminal 100 is outputted as a coupon (see Figure 6) via the printers 200. The number of coupons is, of course, not limited, and one or more coupons are possible.

### (1) First coupon selection process (coupon selection process according to estimated waiting time)

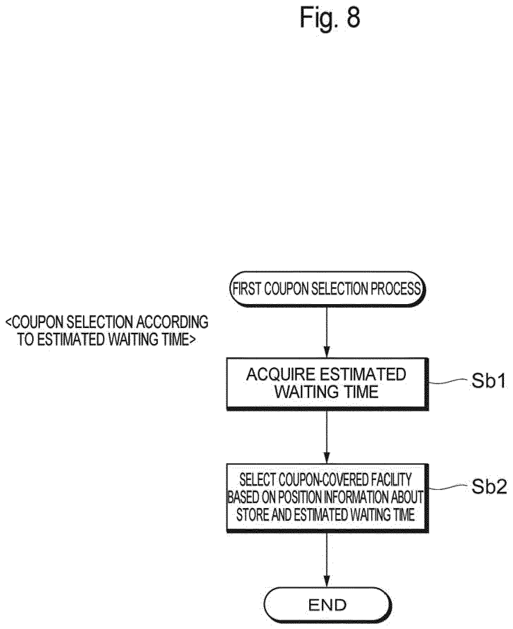

Figure 8 is a flowchart showing a first coupon selection process. At the time of requesting a coupon, the management server 300 acquires new registration information about a newly registered turn-waiting visitor registered with the status management table TA2 and transmits a coupon request including the new registration information.

The coupon issue server (a detection unit) 400 acquires "estimated waiting time" included in the new registration information (step Sb1), acquires position information about a store included in the store DB 440 (that is, visitor position information indicating a current position of the visitor) and position information about facilities included in the coupon-covered facility DB 30, and searches for and selects coupon-covered facilities which the visitor can visit using the estimated waiting time (for example, parks and museums; hereinafter simply referred to as "facilities" as appropriate) (step Sb2). The coupon issue server 400 acquires coupon information corresponding to the selected coupon-covered facilities from the coupon DB (a first storage unit) 420 and transmits the coupon information to the turn management terminal 100 (see step Sa3 in Figure 7) .

Here, although recommended facilities are decided in consideration of the visitor's current position and the position of the facility together with "estimated waiting time" in the above example, the recommended facilities may be decided in consideration of congestion states of facilities, or accessible facilities (for example, coffeehouses nearby or, in the case of a local sightseeing place, a roadside restaurant and the like) may be preferentially decided as the recommended facilities.

### (2) Second coupon selection process (coupon selection process according to attribute of turn-waiting visitor)

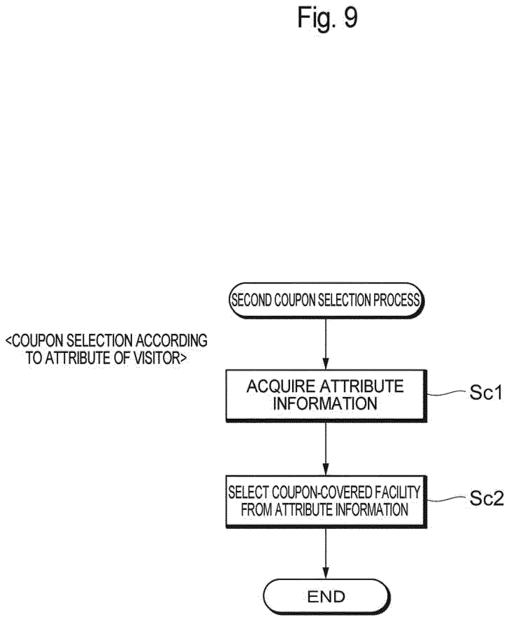

Figure 9 is a flowchart showing a second coupon selection process.

At the time of requesting a coupon, the management server 300 acquires new registration information about a newly registered turn-waiting visitor registered with the status management table TA2 and transmits a coupon request including the new registration information.

The coupon issue server 400 acquires "attribute information" about a reserving group included in new registration information, such as sex, the number of persons for reservation (such as two persons), composition of the reserving group (such as one adult and one child) and age (step Sc1), and searches for and selects facilities to be recommended for a couple (topical coffeehouses, restaurants and the like), facilities to be recommended for a family (amusement parks and the like),or facilities to be recommended for an elderly couple (World Heritage sites and the like) (step Sc2). Since the process after that can be described similarly to the above, it will be omitted.

Although recommended facilities (topical coffeehouses, restaurants and the like) are selected based on "attribute information" about a reserving group in the above example, the recommended facilities may be decided in consideration of the "estimated waiting time" described in the above (1) and the like in addition to "attribute information".

### (3) Third coupon selection process (coupon selection process according to turn-waiting acceptance time)

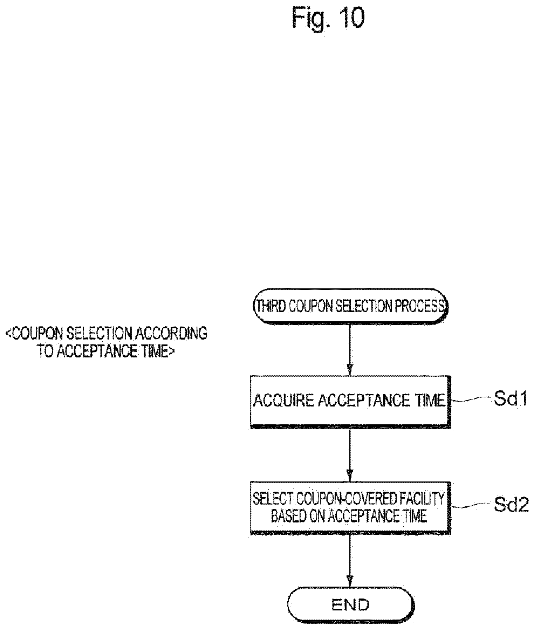

Figure 10 is a flowchart showing a third coupon selection process.

At the time of requesting a coupon, the management server 300 acquires new registration information about a newly registered turn-waiting visitor registered with the status management table TA2 and transmits a coupon request including the new registration information.

The coupon issue server 400 acquires "acceptance time" of reservation included in new registration information (for example, 7:00 to 12:00 (in the morning), 12:00 to 16:00 (in the afternoon), 16:00 to ... (at night) or the like) (step Sd1) and searches for and selects facilities to be recommended for the acceptance time (step Sd2). For example, if the acceptance time is in a time zone in the morning, an athletic field is selected as a facility for which a coupon can be acquired, and a bar is selected in the case of a time zone at night. Since the process after that can be described similarly to the above, it will be omitted.

Not only "acceptance time" but also information about an acceptance date may be included. For example, information about dates and time when events in facilities (for example, XXX Festival, YYY Practical Experience Event and the like) are held (event information) is registered with the coupon-covered facility DB (a second storage unit) 430, and recommended facilities may be decided in consideration of the event information also. Further, recommended facilities may be not only selected based on "acceptance time zone" of reservation but also decided in consideration of the "estimated waiting time", "attribute information" and the like described in the above (1) and (2). How these parameters are to be considered can be appropriately set and changed according to system design.

Next, a process in the case of updating a status of a coupon-covered facility (information about a congestion state and various events and the like) will be described.

### <Facility status update process>

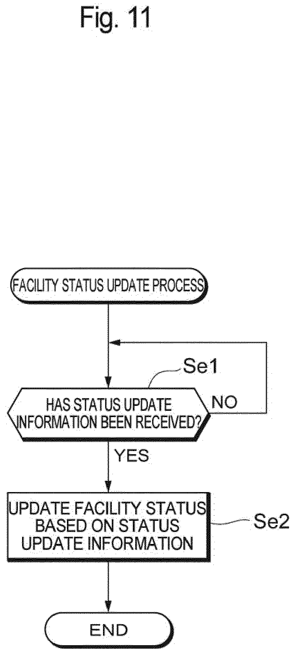

Figure 11 is a flowchart showing a facility status update process intermittently executed by the coupon issue server 400.

The coupon issue server 400 detects whether or not status update information indicating change in a status has been received from each facility (step Se1). As the status update information, for example, congestion state information indicating a congestion state (what percentage the customer collecting rate is, and the like), event information indicating dates and time of various events in the facility and the like are given. The coupon issue server 400 repeatedly executes the process of step Se1 until the status update information is received.

When detecting that the status update information has been received (step Se1: YES), the coupon issue server 400 updates the status information of the coupon-covered facility DB 430 based on the received status update information (step Se2) and ends the process. According to such a configuration, since information about congestion states and events about coupon-covered facilities is updated and reflected in real time, deciding optimal facilities at a current point of time as recommended facilities and the like become possible.

As described above, according to the present embodiment, it becomes possible for a visitor whose waiting is accepted to obtain an optimal coupon appropriate for a current waiting state.

### B. Second embodiment

Though description has been made on the case where one turn management terminal 100 is used in one store in the first embodiment described above, description will be made on a case where a plurality of turn management terminals 100 are used in one store in a second embodiment.

The case of using a plurality of turn management terminals 100 in one store is different from the case of using only one turn management terminal 100 in a point that data is shared among the turn management terminals 100.

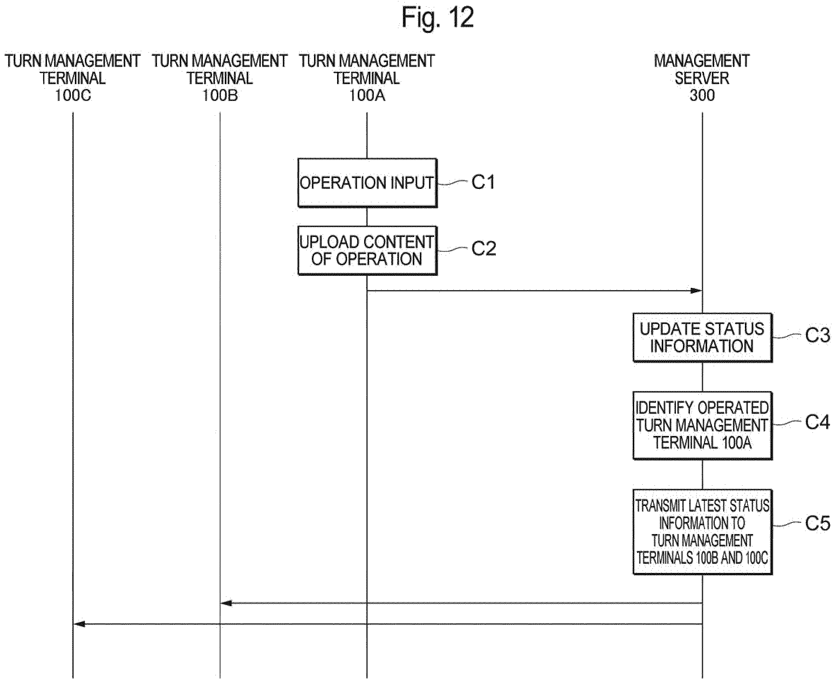

Figure 12 is a sequence diagram in a case where turn management is performed using three turn management terminals 100A to 100C. For example, when a particular turn management terminal 100 (the turn management terminal 100A shown in Figure 12) is operated in Restaurant A (C1), content of the operation (here, status update information is assumed) is uploaded to the management server 300 (C2). The management server 300 updates status information about Restaurant A registered with the status management table TA2 based on the received status update information (C3). Then, the management server 300 refers to the client management table TA1 to identify the turn management terminals 100 used in Restaurant A (C4). Here, since the three turn management terminals 100A to C are registered with the client management table TA1 for Restaurant A, the management server 300 transmits the updated latest status information to the terminals other than the turn management terminal 100A, that is, the turn management terminals 100B and 100C (C5) and ends the process.

As a result, the latest information is always synchronously reflected on each turn management terminal 100. Thereby, it becomes possible to, even in the case of using a plurality of turn management terminals 100 in one store, perform optimal turn-waiting management without occurrence of a trouble that updated information about turn-waiting is not reflected on a part of the turn management terminals 100, and the like.

### C. Others

The present invention is not limited to the embodiments described above and can be implemented in other various forms within a range not departing from the spirit of the present invention. Therefore, the above embodiments are mere examples and should not be interpreted as being limitative. For example, the process steps described above can be executed in arbitrarily changed order or in parallel within a range where inconsistency does not occur in process content.

In the embodiments, an aspect of automatically issuing a coupon suitable for a visitor whose waiting is accepted, in consideration of attributes of the visitor, waiting acceptance time, estimated waiting time and the like is illustrated. Instead, it is also possible for a visitor to select a desired coupon among coupons selected by the coupon issue server 400. To explain this giving an example, coupons (candidates) selected by the coupon issue server 400 are displayed on the touch panel 116 of the turn management terminal 100. A visitor selects a desired coupon from among the displayed coupons (candidates) by operating the touch panel 115a. According to such an aspect, it is possible to efficiently issue a coupon suitable for a visitor.

Further, conditions may be specified for types (attributes) of coupons issued by the coupon issue server 400 by each store. For example, in a case where there are a plurality of coupons to be issued (that is, coupons which can be selected), a condition of preventing facilities of the same business category (for example, coffeehouses) to overlap as coupon-covered facilities, a condition of combining facilities of the same business category (for example, event sites), and the like may be set.

For example, it becomes possible to, in the case where there are a plurality of coupons which can be selected, suppress problems, such as persons in the same business competing for acquisition of customers, by selecting a coupon in a manner that facilities of the same business category do not overlap as coupon-covered facilities where the coupon can be used (that is, selectively issuing a coupon). Especially, if facilities of the same business category overlap as coupon-covered facilities, it is feared that complaints, such as an expected effect not being obtained, occur even though coupons are issued for collection of customers. In this respect, it becomes possible to selectively issue an attractive coupon to each customer by adopting the above configuration, and it becomes possible to enjoy the merit of using the present system to the maximum in all facilities.

The above configuration is applicable not only for categories but also for areas of coupon-covered facilities or the like similarly. For example, a setting may be made so that coupon-covered facilities are concentrated in one area. Otherwise, a setting may be made so that coupon-covered facilities are distributed in various areas. What kind of condition is to be adopted can be set or changed by an owner or the like of each store.

Though the coupon issue server 400 and the management server 300 are separately configured in the above embodiments, for example, a configuration is also possible in which all (or a part) of functions of the management server 300 are mounted on the coupon issue server 400.

Further, though a turn ticket issued from the printer 200 is not especially mentioned in the above embodiments, it is possible to improve efficiency of turn-waiting management by using QR Code(R). After inputting turn-waiting, a visitor (a reserving person) receives a turn ticket issued from the printer 200. After that, the reserving person reads a QR Code(R) printed on the turn ticket using his own smartphone or the like. By reading the QR Code(R), a current turn-waiting state (the number of waiting persons at present and the like) is displayed on the liquid crystal panel of the smartphone or the like. Then, when the reserving person's turn comes near, a reminder mail for call arrives. Thereby, the reserving person can enter a store without queuing up at the store, and reducing the stress of the action of "waiting for a long time" and the like become possible.

As a method of setting a reminder mail, there is a method of displaying a message prompting input of a mail address in a page when a QR Code(R) is read in (such as "Input a mail address to receive a notification below"), and other methods. By inputting a mail address following the message, it becomes possible for the reserving person to receive a reminder mail.

Instead of (or in addition to) a reminder mail, a telephone call may be made. After inputting turn-waiting, a message to confirm whether the reserving person wants to set a telephone call or not to the reserving person is displayed on the turn management terminal 100 (such as "A telephone call can be set. If you request it, put your telephone number after pressing the button below.") If the reserving person requests telephone call setting, he inputs his telephone number following this message. As a result, when the reserving person's turn is near, a call by automatic speech or the like is made, and he can enter the store without queuing up at the store for a long time.

A program for realizing each embodiment described above may be caused to be stored into a recording medium. By using this recording medium, the program can be installed into a computer for managing turn-waiting for reservation in a facility. Here, the recording medium which stores the program may be a non-transitory recording medium. Though the non-transitory recording medium is not especially limited, for example, a recording medium such as a CD-ROM is possible.

## Claims

1. A coupon issue system for issuing a coupon to a turn-waiting user; the coupon issue system comprising:
an input unit accepting new registration of the turn-waiting;
a generation unit generating new registration information based on content of acceptance of the new registration;
a first storage unit storing pieces of coupon information about facilities where use of the coupon is possible;
a selection unit selecting a piece of coupon information based on the new registration information; and
an issue unit issuing the selected piece of coupon information to the user.

2. The coupon issue system according to claim 1, wherein
if there are a plurality of pieces of selectable coupon information, the selection unit selects the piece of coupon information in a manner that facilities of the same business category do not overlap as coupon-covered facilities where use of the coupon is possible.

3. The coupon issue system according to claim 2, wherein
the generation unit calculates estimated waiting time in consideration of at least the number of turn-waiting groups at a current point of time and generates the new registration information including the calculated estimated waiting time, and
the selection unit selects the piece of coupon information based on the estimated waiting time.

4. The coupon issue system according to claim 3, further comprising
a detection unit detecting user position information indicating a current position of the user and facility position information indicating a position of the facility, wherein
the selection unit selects the piece of coupon information based on the estimated waiting time, the user position information and the facility position information.

5. The coupon issue system according to claim 2, wherein
the new registration information includes attribute information indicating at least any of sex of the user, the number of persons constituting a group including the user and age, and
the selection unit selects the piece of coupon information based on the attribute information.

6. The coupon issue system according to claim 2, wherein
the new registration information includes at least acceptance time, and
the selection unit selects the piece of coupon information based on the acceptance time.

7. The coupon issue system according to claim 6, comprising
a second storage unit storing pieces of event information about the facilities where use of the coupon is possible, wherein
the selection unit selects the piece of coupon information based on the acceptance time and the pieces of event information.

8. A non-transitory recording medium in which a program for causing a computer provided with a memory to realize a function of issuing a coupon to a turn-waiting user is recorded, wherein
the memory stores pieces of coupon information about facilities where use of the coupon is possible, and
the program causes the computer to realize:
an input function of accepting new registration of the turn-waiting;
a generation function of generating new registration information based on content of acceptance of the new registration;
a selection function of selecting a piece of coupon information based on the new registration information; and
an issue function of issuing the selected piece of coupon information to the user, and
if there are a plurality of pieces of selectable coupon information, the selection function selects the piece of coupon information in a manner that facilities of the same business category do not overlap as coupon-covered facilities where use of the coupon is possible.
